# EUROPEAN PATENT SPECIFICATION

(11) **EP 3 173 615 B1**
(45) Date of publication and mention of the grant of the patent: **14.02.2018**
(21) Application number: 16200206.7
(22) Date of filing: 23.11.2016
(51) Int. Cl.: F02N 11/08, F02N 3/04

(54) **STARTING SYSTEM AND MOTORCYCLE**
ANLASSSYSTEM UND MOTORRAD
SYSTÈME DE DÉMARRAGE ET MOTOCYCLE

(30) Priority: 27.11.2015 JP 2015232339
(43) Date of publication of application: 31.05.2017
(73) Proprietor: Yamaha Hatsudoki Kabushiki Kaisha, Iwata-shi, Shizuoka 438-8501 (JP)
(72) Inventor: TSUKANAKA, Hideyoshi, Iwata-shi, Shizuoka 438-8501 (JP); SAKASHITA, Yohei, Iwata-shi, Shizuoka 438-8501 (JP)
(74) Representative: Grünecker Patent- und Rechtsanwälte PartG mbB

(56) References cited:
- JP-A- 2013 087 723
- JP-A- 2013 209 952
- US-A1- 2008 276 891

## Description

The present invention relates to an engine system and a straddled vehicle.

In a straddled vehicle such as a motorcycle in which an idle stop of an engine is automatically performed, in the case where a constant condition for the idle stop is satisfied, the engine is automatically stopped. Then, in the case where a constant condition for the subsequent re-start is satisfied, the engine is re-started by a starter motor. However, in the case where the idle stop is performed with a battery deteriorated, the subsequent re-start sometimes cannot be appropriately performed.

Then, it is suggested that, in the case where the engine is started by an operation of a kick pedal (kick start-up), the idle stop is prevented (see JP 2013-087723 A and JP 2013-209952 A, for example). Normally, in the case where the rider is aware of deterioration of the battery, the rider performs the kick start-up without using the starter motor. Therefore, unsuccessful re-start after the idle stop due to the deterioration of the battery is prevented by the prevention of the idle stop in the case where the engine is started by the kick start.

On the other hand, the kick start-up is sometimes performed depending on the use environment of a vehicle even in the case where the battery is not deteriorated. Because friction of the engine is increased in a cold district, for example, the engine cannot be started by the starter motor even in the case where the battery is not deteriorated, and the kick start-up is sometimes performed. In such a case, even when the idle stop is performed, the engine can be re-started by the starter motor due to increases in temperatures of the engine and the battery after the start-up of the engine. In the case where the idle stop is always prevented after the kick start-up, because the idle stop is not performed even when the re-start is actually possible, an improvement in fuel efficiency due to the idle stop is prevented.

An object of the present invention is to provide an engine system and a straddled vehicle capable of preventing unsuccessful re-start after an idle stop and sufficiently acquiring effects due to the idle stop. According to the present invention said object is solved by an engine system having the features of independent claim 1. Preferred embodiments are laid down in the dependent claims.
(1) An engine system according to one aspect of the present invention includes an engine, a battery, a crankshaft driving device that is configured to rotate a crankshaft of the engine by electric power of the battery, a controller that is configured to control the engine and the crankshaft driving device in any control mode of an idle stop mode and a non-idle stop mode, a switcher that is configured to be operated by a rider in order to switch the control mode of the controller between the idle stop mode and the non-idle stop mode, and a kick starter that is configured to be operated by the rider in order to rotate the crankshaft, wherein the controller, in the idle stop mode, is configured to control the engine and the crankshaft driving device such that the engine is configured to be stopped in the case where a predetermined idle stop condition is satisfied, and is configured to control the engine and the crankshaft driving device such that the engine is configured to be re-started in the case where it is after the satisfaction of the idle stop condition and a predetermined re-start condition is satisfied, in the non-idle stop mode, is configured to control the engine such that the engine is not configured to be stopped even in the case where the idle stop condition is satisfied, and is configured to prevent start-up of the engine in the case where the crankshaft is configured to be rotated by an operation of the kick starter with the engine that is configured to be stopped and the control mode that is configured to be set to the idle stop mode, and is configured to allow the start-up of the engine in the case where the crankshaft is configured to be rotated by the operation of the kick starter with the engine that is configured to be stopped and the control mode that is configured to be set to the non-idle stop mode.
   In this engine system, the control mode is switched between the idle stop mode and the non-idle stop mode by an operation of the switcher by the rider. The idle stop and the re-start of the engine are automatically performed in the idle stop mode, and the idle stop of the engine is not performed in the non-idle stop mode. Thus, the rider can switch whether or not the idle stop is performed on his or her will. Therefore, the idle stop can be appropriately performed in the case where the battery is not deteriorated. As a result, the effect of an improvement in fuel efficiency due to the idle stop can be sufficiently acquired.
   Further, in the case where the crankshaft is rotated by the operation of the kick starter with the engine stopped, the start-up of the engine is allowed or prevented according to the control mode. In the case where the control mode is the idle stop mode, even when the crankshaft is rotated by the operation of the kick starter, the engine is not started. Therefore, in the case where the battery is deteriorated, even when the kick starter is operated in order to start the engine, if the control mode is the idle stop mode, the engine cannot be started. Thus, the idle stop performed with the battery deteriorated is prevented. Therefore, unsuccessful re-start after the idle stop due to the deterioration of the battery is prevented.
   On the other hand, in the case where the control mode is the non-idle stop mode, when the crankshaft is rotated by the operation of the kick starter, the engine is started. In this case, even when the engine is started with the battery deteriorated, because the idle stop and the re-start of the engine are not preformed, unsuccessful re-start after the idle stop due to the deterioration of the battery does not occur. Further, in the case where the battery is not deteriorated, the idle stop can be appropriately performed by switching of the control mode to the idle stop mode by the rider after the start-up of the engine.
(2) An engine may include a fuel injection device that is configured to inject fuel into an intake passage or a combustion chamber of the engine, and an ignition device configured to ignite a fuel-air mixture in the combustion chamber, and the controller is configured to prevent the start-up of the engine by controlling the engine such that at least one of the injection of the fuel by the fuel injection device and the ignition by the ignition device is not performed. In this case, the start-up of the engine can be prevented by the simple control with no complication of the configuration.
(3) The controller, in the case where controlling the crankshaft driving device to rotate the crankshaft, is configured to determine that the crankshaft is configured to be rotated by the crankshaft driving device. In this case, whether the crankshaft is rotated by the crankshaft driving device or another cause can be easily determined.
(4) An engine system may further include a starter switch which is configured to be operated by the rider in order to run the crankshaft driving device, wherein the controller, in the case where the crankshaft is configured to be rotated, is configured to determine whether the crankshaft is rotated by the crankshaft driving device based on a state of the starter switch. In this case, whether the crankshaft is rotated by the crankshaft driving device or another cause can be easily determined.
(5) An engine system may further include a guide that is configured to prompt the rider to switch the control mode to the non-idle stop mode in the case where the crankshaft is configured to be rotated by the operation of the kick starter with the engine that is configured to be stopped and the control mode that is configured to be set to the idle stop mode. In this case, the rider can recognize the necessity to switch the control mode to the non-idle stop mode, and the engine can be quickly started.
(6) The controller is configured to prevent the start-up of the engine in the case where the crankshaft is configured to be rotated by the crankshaft driving device with the engine that is configured to be stopped and the control mode that is configured to be set to the non-idle stop mode.
   In the case where the control mode is kept to the non-idle stop mode although the battery is not deteriorated, the opportunity for the idle stop is lost, so that the fuel efficiency deteriorates. Normally, in the case where the battery is not deteriorated, the engine is started with the use of the crankshaft driving device. Then, in the case where the crankshaft is rotated by the crankshaft driving device, the engine is started only when the control mode is the idle stop mode. Thus, because the idle stop is appropriately performed after the start-up of the engine, the effect of an improvement in fuel efficiency due to the idle stop can be sufficiently acquired.
(7) A straddled vehicle according to another aspect of the present invention includes a main body having a drive wheel, and the above-mentioned engine system that is configured to generate motive power for rotating the drive wheel.

In this straddled vehicle, because the above-mentioned engine system is used, the unsuccessful re-start after the idle stop can be prevented, and the effect of an improvement in fuel efficiency due to the idle stop can be sufficiently acquired.

### BRIEF DESCRIPTION OF THE SEVERAL VIEWS OF THE DRAWING

Fig. 1 is a schematic side view showing a schematic configuration of a motorcycle according to one embodiment of the present invention;
Fig. 2 is an external perspective view showing a configuration of a handle;
Fig. 3 is a schematic diagram for explaining a configuration of an engine system;
Fig. 4 is a flow chart showing one example of a process performed by a controller during start-up of the engine;
Fig. 5 is a flow chart showing another example of a process performed by the controller during the start-up of the engine; and
Fig. 6 is an external perspective view showing an example of a guide.

### DESCRIPTION OF THE PREFERRED EMBODIMENTS

An engine system and a straddled vehicle including the engine system according to embodiments of the present invention will be described below.

### (1) Motorcycle

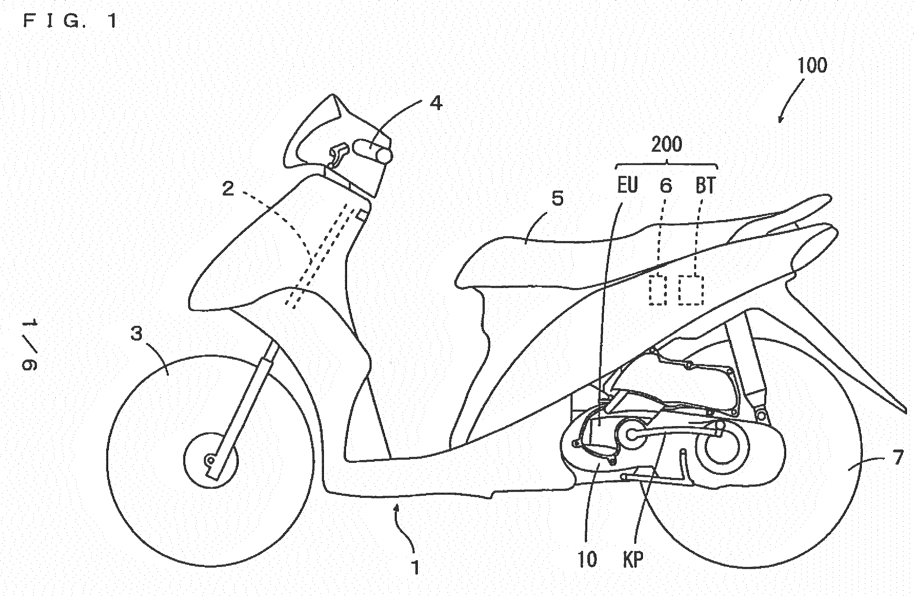

Fig. 1 is a schematic side view showing a schematic configuration of the motorcycle according to one embodiment of the present invention. The motorcycle according to the present embodiment is one example of the straddled vehicle. In the following description, the front, the rear, the left, and the right respectively mean the front, the rear, the left and the right based on a viewpoint of a rider of the motorcycle.

In the motorcycle 100 of Fig. 1, a front fork 2 is provided at a front portion of a vehicle body 1 to be swingable in a left-and-right direction. A handle 4 is attached to an upper end of the front fork 2, and a front wheel 3 is rotatably attached to a lower end of the front fork 2.

A seat 5 is provided at an upper portion of substantially the center of the vehicle body 1. A controller 6, a battery BT and an engine unit EU are provided below the seat 5. The controller 6 is an ECU (Engine Control Unit), for example. The controller 6, the battery BT and the engine unit EU constitutes an engine system 200. A rear wheel 7 is rotatably attached to a lower portion of the rear end of the vehicle body 1. The rotation of the rear wheel 7 is driven by motive power generated by an engine 10.

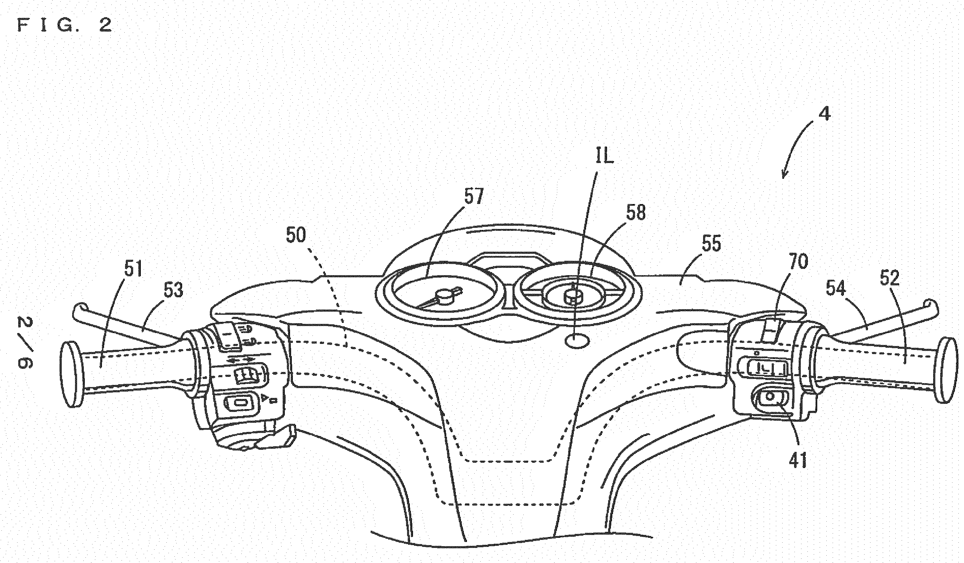

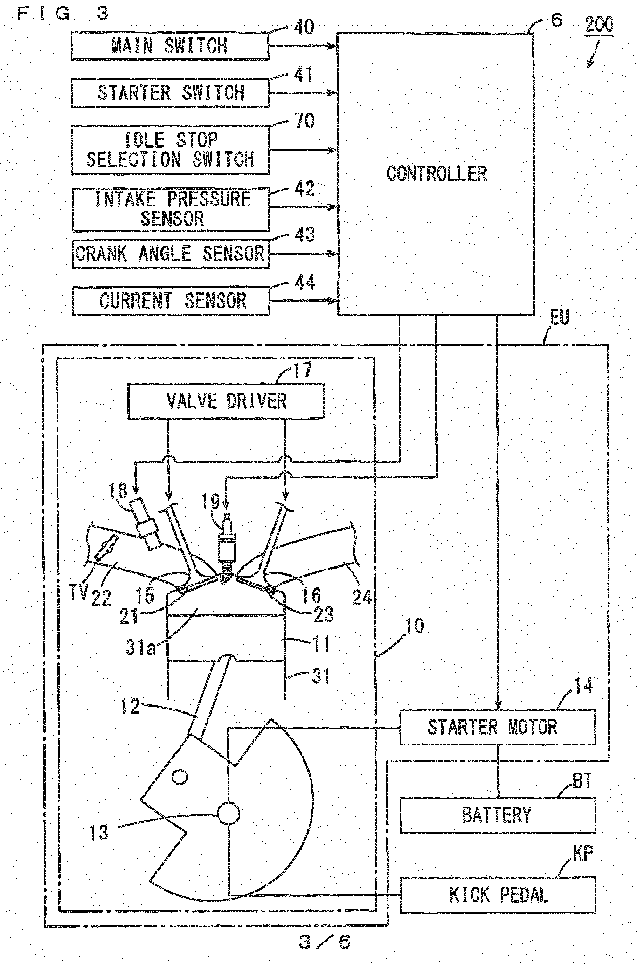

Fig. 2 is an external perspective view showing a configuration of the handle 4. In Fig. 2, appearance of the handle 4 as viewed from the rider who is seated on the seat 5 is shown. As shown in Fig. 2, the handle 4 includes a handle bar 50 that extends to the left and right. A grip 51 is provided at a left portion of the handle bar 50, and an accelerator grip 52 is provided at a right portion of the handle bar 50. An opening (a degree of opening) of a throttle valve TV (Fig. 3), described below, is adjusted by an operation of the accelerator grip 52.

A brake lever 53 for operating a brake of the rear wheel 7 (Fig. 1) is arranged in front of the grip 51, and a brake lever 54 for operating a brake of the front wheel 3 (Fig. 1) is arranged in front of the accelerator grip 52. The handle bar 50 is covered by a handle cover 55. A starter switch 41 and an idle stop selection switch 70 are provided at portions of the handle cover 55 adjacent to the accelerator grip 52. When the starter switch 41 is operated by the rider, a starter motor 14 (Fig. 3), described below, drives the rotation of the crankshaft 13. The idle stop selection switch 70 is a seesaw-type switch, for example, and operated by the rider in order to switch control modes, described below.

At the handle cover 55, a speed meter 57, an engine rotation speed meter 58, other switches and the like are provided, and an idle stop lamp IL is provided. The idle stop lamp IL shows the current control mode. Further, a main switch 40 (Fig. 3) is provided below the handle cover 55. The main switch 40 is operated by the rider in order for electric power to be supplied from the battery BT to an electrical system such as the controller 6.

Fig. 3 is a schematic diagram for explaining a configuration of the engine system 200. As shown in Fig. 3, the engine unit EU includes the engine 10 and the starter motor 14. The engine 10 includes a piston 11, a connecting rod 12, a crankshaft 13, an intake valve 15, an exhaust valve 16, a valve driver 17, an injector 18 and an ignition device 19.

The piston 11 is provided to be able to reciprocate in a cylinder 31 and connected to the crankshaft 13 via the connecting rod 12. The reciprocating motion of the piston 11 is converted into the rotational motion of the crankshaft 13. A combustion chamber 31a is formed on the piston 11. The combustion chamber 31a communicates with an intake passage 22 via an intake port 21 and communicates with an exhaust passage 24 via an exhaust port 23. The intake valve 15 is provided to open and close the intake port 21, and the exhaust valve 16 is provided to open and close the exhaust port 23. The intake valve 15 and the exhaust valve 16 are driven by the valve driver 17. The throttle valve TV for adjusting a flow rate of air flowing in from outside is provided in the intake passage 22. In the present example, the injector 18 is configured to inject the fuel into the intake passage 22, and the ignition device 19 is configured to ignite a fuel-air mixture in the combustion chamber 31a. The injector 18 may be configured to inject the fuel into the combustion chamber 31a.

The starter motor 14 and a kick pedal KP are respectively connected to the crankshaft 13. The starter motor 14 drives the rotation of the crankshaft 13 by electric power of the battery BT. A rotary electrical machine (an integrated starter motor) capable of driving the crankshaft 13 by the electric power of the battery BT and charging the battery BT by the electric power generated by the rotation of the crankshaft 13 may be used instead of the starter motor 14.

When the rider operates the kick pedal KP, the rotation of the crankshaft 13 is driven. The rotation of the crankshaft 13 is started by the starter motor 14 or the operation of the kick pedal KP, and the fuel injection by the injector 18 and the ignition by the ignition device 19 are started, whereby the combustion is started in the combustion chamber 31a. Thus, running of the engine 10 is started (start-up). Hereinafter, the start-up of the engine 10 by the use of the starter motor 14 is referred to as motor start-up, and the start-up of the engine 10 by the use of the kick pedal KP is referred to as kick start-up.

The controller 6 includes a CPU (Central Processing Unit) and a memory, for example. A microcomputer may be used instead of the CPU and the memory. The main switch 40, the starter switch 41, the idle stop selection switch 70, an intake pressure sensor 42, a crank angle sensor 43 and a current sensor 44 are electrically connected to the controller 6. The intake pressure sensor 42 detects the pressure in the intake passage 22. The crank angle sensor 43 detects a crank angle indicating a rotation position of the crankshaft 13. The current sensor 44 detects an electric current flowing in the starter motor 14 (hereinafter referred to as a motor current).

Operations of the main switch 40, the starter switch 41 and the idle stop selection switch 70 are supplied to the controller 6 as operation signals, and results of detection by the intake pressure sensor 42, the crank angle sensor 43 and the current sensor 44 are supplied to the controller 6 as detection signals. The controller 6 controls the starter motor 14, the injector 18 and the ignition device 19 based on the supplied operation signals and detection signals.

### (2) Control Mode

The controller 6 of Fig. 3 controls the engine unit EU in any control mode of an idle stop mode and a non-idle stop mode. In the idle stop mode, in the case where a predetermined idle stop condition is satisfied, the engine 10 is automatically stopped (an idle stop). Specifically, the combustion is not performed in the combustion chamber 31a due to the stop of at least one of the fuel injection by the injector 18 and the ignition by the ignition device 19. In the case where a predetermined re-start condition is satisfied after the idle stop, the engine 10 is automatically re-started by the motor start-up.

The idle stop condition includes a condition related to at least one of a throttle opening (the degree of opening of the throttle valve TV), a vehicle speed and a rotation speed of the engine 10 (a rotation speed of the crankshaft 13), and may further include another condition such as an operation of the brake lever, for example. The re-start condition is that the throttle opening becomes larger than 0 by an operation of the accelerator grip, for example. Further, the re-start condition may be another condition such as release of the operation of the brake lever.

Further, the idle stop condition may include a predetermined idle stop preparation condition. For example, the idle stop preparation condition is that a temperature of the engine 10 (a machine temperature) is a specified value (50 °C, for example) or more, the vehicle speed reaches a specified value (10 km/h, for example) at least once after the start-up of the engine 10, and a ratio of a travelling time period of the motorcycle 100 to a running time period of the engine 10 is a specified value (50 %, for example) or more. The idle stop is prevented from being excessively performed by the setting of the idle stop preparation condition. Further, in the case where the idle stop is performed with the machine temperature not sufficiently increased, the subsequent re-start may be unsuccessful. Therefore, unsuccessful re-start due to the machine temperature is prevented by the setting of the condition of the machine temperature as the idle stop preparation condition.

Further, the idle stop may be performed not right after the satisfaction of the idle stop condition but in the case where the satisfaction of the idle stop condition is continued for a constant period of time (5 seconds, for example). In this case, the idle stop is not performed in the case where the motorcycle 100 is stopped only for a significantly short period of time (1 to 2 seconds, for example). Thus, the idle stop is prevented from being excessively performed, and a reduction in drivability is inhibited.

On the other hand, in the non-idle stop mode, even in the case where the idle stop condition is satisfied, the engine 10 is not stopped. Therefore, the engine 10 is not automatically re-started.

The rider can freely switch the control modes by operating the idle stop selection switch 70 of Fig. 2. A lit state of the idle stop lamp IL of Fig. 2 varies depending on the control mode and an operation state of the engine 10. For example, in the case where the control mode is the idle stop mode and the engine 10 is in a running state, the idle stop lamp IL is continuously lit. Alternatively, in the case where the control mode is the idle stop mode and the engine 10 is in the running state, only when the above-mentioned idle stop preparation condition is satisfied and another idle stop condition is not satisfied, the idle stop lamp IL may be lit. Further, in the case where the control mode is the idle stop mode and the idle stop of the engine 10 is under execution, the idle stop lamp IL flickers. On the other hand, in the case where the control mode is the non-idle stop mode, the idle stop lamp IL is turned off.

In the case where the battery BT is not deteriorated, the control mode is preferably set to the idle stop mode. In this case, the idle stop is appropriately performed, and effects such as an improvement in fuel efficiency and a reduction in exhaust gas are acquired. On the other hand, in the case where the battery BT is deteriorated, a torque generated by the starter motor 14 is not sufficient, so that it is difficult to perform the motor start-up. Therefore, when the idle stop is performed, the subsequent re-start of the engine 10 may not be successful. Thus, the control mode is preferably set to the non-idle stop mode. Thus, unsuccessful re-start after the idle stop is prevented.

However, switching the control modes is performed only by the operation of the rider as described above. Therefore, the control mode is sometimes set to a not preferable mode due to forgetfulness of the rider and the like. For example, the control mode is sometimes set to the idle stop mode with the battery BT deteriorated.

### (3) Allowance and Prevention of Start-up of Engine

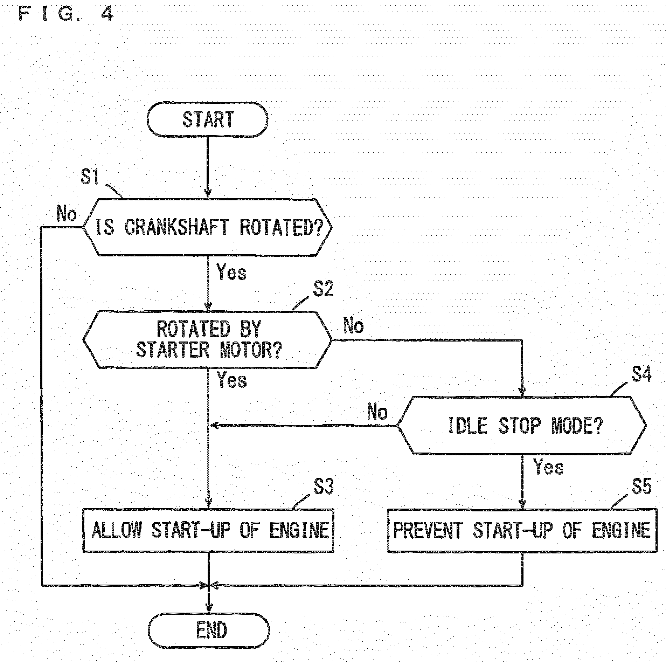

In the present embodiment, the controller 6 allows or prevents the start-up of the engine 10 according to a predetermined condition. Fig. 4 is a flow chart showing one example of a process performed by the controller 6 during the start-up of the engine 10. The process of Fig. 4 is performed based on a control program stored in advance in the memory and repeatedly performed in a constant period from the time when the main switch 40 of Fig. 3 is switched on until the time when the start-up of the engine 10 is completed, for example.

First, the controller 6 determines whether the crankshaft 13 is rotated based on the detection signal from the crank angle sensor 43 (step S1). In the case where the crankshaft 13 is not rotated, the controller 6 ends the process as it is. In the case where the crankshaft 13 is rotated, the controller 6 determines whether the crankshaft 13 is rotated by the starter motor 14 (step S2). As described above, the starter motor 14 is controlled by the controller 6. Therefore, the controller 6 can easily determine whether the crankshaft 13 is rotated by the starter motor 14 based on a control state of the starter motor 14.

The controller 6 may make a determination in the step S2 based on the operation signal from the starter switch 41 or may make a determination in the step S2 based on the detection signal from the current sensor 44. Whether the crankshaft 13 is rotated by the starter motor 14 can also be easily determined in the case where the operation signal from the starter switch 41 or the detection signal from the current sensor 44 is used. Further, a pedal sensor that detects an operation of the kick pedal PK may be provided, and a determination may be made in the step S2 based on the result of detection by the pedal sensor. For example, in the step S2, in the case where the operation of the kick pedal PK is detected by the pedal sensor, it may be determined that the crankshaft 13 is rotated by the operation of the kick pedal PK not the starter motor 14. In the case where the operation of the kick pedal PK is not detected, it may be determined that the crankshaft 13 is rotated by the starter motor 14.

In the case where the crankshaft 13 is rotated by the starter motor 14, the controller 6 allows the start-up of the engine 10 (step S3). Specifically, the controller 6 controls the engine 10 such that the fuel injection by the injector 18 and the ignition by the ignition device 19 are started. Thus, the combustion in the combustion chamber 31a of Fig. 3 is started, and the engine 10 is started.

On the other hand, in the case where the crankshaft 13 is rotated by an external force not starter motor 14, the controller 6 determines whether the control mode is the idle stop mode (step S4). The external force here includes the force that is applied to the kick pedal KP by the rider for the kick start-up. Further, the external force may include another human force such as the force with which the rider and the like push the motorcycle 100 for push-start, or may include gravity and the force of another device. Gravity is the force exerted on the motorcycle 100 travelling on a downhill road, for example. The force of another device is the force of another vehicle that tows the motorcycle 100, for example.

In the case where the control mode is the non-idle stop mode, the controller 6 proceeds to the above-mentioned step S3. On the other hand, in the case where the control mode is the idle stop mode, the controller 6 prevents the start-up of the engine 10 (step S5). Specifically, the controller 6 controls the engine 10 such that at least one of the fuel injection by the injector 18 and the ignition by the ignition device 19 is not performed. Thus, the combustion does not occur in the combustion chamber 31a of Fig. 3, and the engine 10 is not started. Thus, the start-up of the engine 10 can be prevented by the simple control with no complication of the configuration. The controller 6 may directly control the injector 18 such that the fuel is not injected, or may control a fuel pump (not shown) such that the fuel is not supplied to the injector 18.

Normally, in the case where the battery BT is deteriorated, because it is difficult to perform the motor start-up, the engine 10 is started with the use of an external force by the kick start-up, the push-start or the like. In the case where the crankshaft 13 is rotated by an external force not the starter motor 14, the start-up of the engine 10 is allowed only when the control mode is the non-idle stop mode. Thus, the idle stop is prevented from being automatically performed with the battery BT deteriorated.

Meanwhile, in a cold district and the like, because the friction of the engine 10 is increased, even when the battery BT is not deteriorated, it is difficult to perform the motor start-up, and the engine 10 is sometimes started with the use of an external force. Alternatively, even when it is possible to perform the motor start-up, the engine 10 is sometimes started by the kick start-up due to preference or habit of the rider. In such a case, the engine 10 is started with the use of an external force with the control mode set to the non-idle stop mode, and the control mode is switched to the idle stop mode by the rider after the start-up of the engine 10. Thus, the idle stop can be appropriately performed.

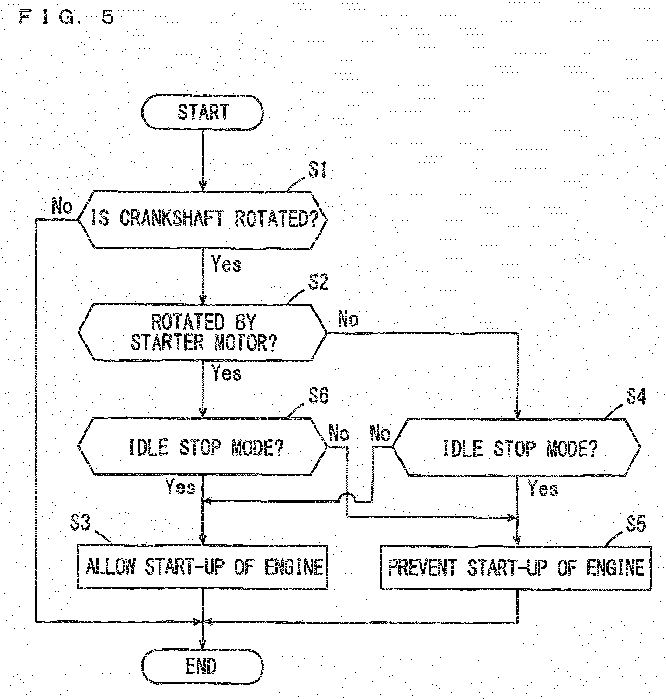

Fig. 5 is a flow chart showing another example of a process performed by the controller 6 during the start-up of the engine 10. As for the example of Fig. 5, differences from the example of Fig. 4 will be described.

In the example of Fig. 5, in the case where the crankshaft 13 is rotated by the starter motor 14 in the step S2, the controller 6 determines whether the control mode is the idle stop mode (step S6). In the case where the control mode is the idle stop mode, the controller 6 allows the start-up of the engine 10 (step S3). On the other hand, in the case where the control mode is the non-idle stop mode, the controller 6 prevents the start-up of the engine 10 (step S5).

In the case where the control mode is kept to the non-idle stop mode although the battery BT is not deteriorated, opportunities for the idle stop are lost, so that the fuel efficiency deteriorates. Normally, in the case where the battery BT is not deteriorated, the engine 10 is started by the motor start-up. In the case where the crankshaft 13 is rotated by the starter motor 14 in the step S2, the engine 10 is started only when the control mode is the idle stop mode. Thus, because the idle stop is appropriately performed after the start-up of the engine 10, the effects of an improvement in fuel efficiency due to the idle stop can be sufficiently acquired.

### (4) Effects

In the engine system 200 according to the above-mentioned embodiment, in the case where the crankshaft 13 is rotated by the operation of the kick pedal KP with the engine 10 stopped, the start-up of the engine 10 is allowed or prevented according to the control mode. In the case where the control mode is the idle stop mode, even when the crankshaft is rotated by the operation of the kick pedal KP, the engine 10 is not started. Thus, the idle stop of the engine 10 with the battery BT deteriorated is prevented from being performed. Thus, unsuccessful re-start after the idle stop due to the deterioration of the battery BT is prevented.

On the other hand, in the case where the control mode is the non-idle stop mode, when the crankshaft 13 is rotated by the operation of the kick pedal KP, the engine 10 is started. In this case, even when the engine 10 is started with the battery BT deteriorated, because the idle stop and the re-start of the engine 10 are not performed, the unsuccessful re-start after the idle stop due to the deterioration of the battery BT does not occur. Further, in the case where the battery BT is not deteriorated, the idle stop can be appropriately performed by switching of the control mode to the idle stop mode after the start-up of the engine 10 by the rider. Thus, effects such as an improvement in fuel efficiency and a reduction in exhaust gas can be sufficiently acquired.

### (5) Other Embodiments

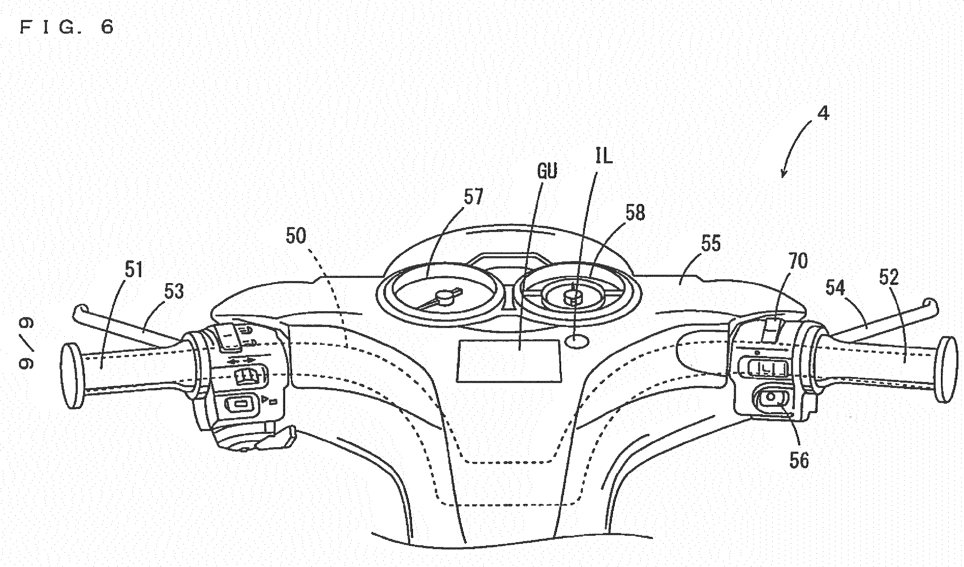

(5-1) A guide that prompts the rider to switch the control modes may be provided. Fig. 6 is an external perspective view showing an example of the guide. In the example of Fig. 6, the guide GU is provided at the handle cover 55. The guide GU of Fig. 6 is a liquid crystal display, for example.
   As described above, in the case where the control mode is the idle stop mode, the kick start-up cannot be performed. Depending on the rider, the rider may not understand the reason why the engine 10 is not started and be confused. Further, the rider may erroneously recognize that a problem with the engine 10 or another part has occurred. In the case where the crankshaft 13 is rotated by the operation of the kick pedal KP with the control mode set to the idle stop mode, the guide GU prompts the rider to switch the control mode to the non-idle stop mode. For example, character information such as "Cannot perform kick start-up in the idle stop mode. Please switch it to the non-idle stop mode" is displayed on the guide GU. Thus, the rider can realize the necessity to switch the control modes and quickly start the engine 10.
   Further, the rider may be prompted to switch the control modes by the idle stop lamp IL instead of the guide GU. For example, in the case where the crankshaft 13 is rotated by the operation of the kick pedal KP with the control mode set to the idle stop mode, the idle stop lamp IL flickers at a high speed. In the case where the rider has simply forgotten to switch the control modes, the rider can be reminded of the necessity to switch the control modes even by such a simple method.
(5-2) While the above-mentioned embodiments are examples in which the present invention is applied to the motorcycle, the present invention may be applied to another straddled vehicle such as a motor tricycle or an ATV (All Terrain Vehicle).
(6) Correspondences between Constituent Elements in Claims and Parts in Preferred Embodiments

In the following paragraphs, non-limiting examples of correspondences between various elements recited in the claims below and those described above with respect to various preferred embodiments of the present invention are explained.

In the above-mentioned embodiment, the engine system 200 is an example of an engine system, the engine 10 is an example of an engine, the battery BT is an example of a battery, the starter motor 14 is an example of a crankshaft driving device, the crankshaft 13 is an example of a crankshaft, the controller 6 is an example of a controller, the idle stop selection switch 70 is an example of a switcher, the kick pedal KP is an example of a kick starter, the injector 18 is an example of a fuel injection device, the ignition device 19 is an example of an ignition device, the starter switch 41 is an example of a starter switch, the guide GU is an example of a guide, the motorcycle 100 is an example of a straddled vehicle, the vehicle body 1 is an example of a main body and the rear wheel 7 is an example of a drive wheel.

## Claims

1. An engine system (200) comprising:
an engine (10);
a battery (BT);
a crankshaft driving device that is configured to rotate a crankshaft (13) of the engine (10) by electric power of the battery (BT);
a controller (6) that is configured to control the engine (10) and the crankshaft driving device in any control mode of an idle stop mode and a non-idle stop mode; and
a kick starter (KP) that is configured to be operated by the rider in order to rotate the crankshaft (13),
the engine system (200) comprising a switcher (70) that is configured to be operated by a rider in order to switch the control mode of the controller (6) between the idle stop mode and the non-idle stop mode;
wherein the controller (6),
in the idle stop mode, is configured to control the engine (10) and the crankshaft driving device such that the engine (10) is configured to be stopped in the case where a predetermined idle stop condition is satisfied, and wherein the controller (6) is configured to control the engine (10) and the crankshaft driving device such that the engine (10) is configured to be re-started in the case where it is after the satisfaction of the idle stop condition and a predetermined re-start condition is satisfied,
in the non-idle stop mode, the controller (6) is configured to control the engine (10) such that the engine (10) is configured to not be stopped even in the case where the idle stop condition is satisfied, and
wherein the controller (6) is configured to prevent start-up of the engine (10) in the case the crankshaft (13) is configured to be rotated by an operation of the kick starter (KP) with the engine (10) that is configured to be stopped and the control mode that is configured to be set to the idle stop mode, and wherein the controller (6) is configured to allow the start-up of the engine (10) in the case where the crankshaft (13) is configured to be rotated by the operation of the kick starter (KP) with the engine (10) that is configured to be stopped and the control mode that is configured to be set to the non-idle stop mode.

2. An engine system (200) according to claim 1, wherein
the engine (10) includes
a fuel injection device (18) that is configured to inject fuel into an intake passage (22) or a combustion chamber (31a) of the engine (10), and
an ignition device (19) configured to ignite a fuel-air mixture in the combustion chamber (31a), and
the controller (6) is configured to prevent the start-up of the engine (10) by controlling the engine (10) such that at least one of the injection of the fuel by the fuel injection device (18) and the ignition by the ignition device (19) is not performed.

3. An engine system (200) according to claim 1 or 2, wherein
the controller (6), in the case where controlling the crankshaft driving device to rotate the crankshaft (13), is configured to determine that the crankshaft (13) is configured to be rotated by the crankshaft driving device.

4. An engine system (200) according to claim 1 or 2, further comprising a starter switch (41) that is configured to be operated by the rider in order to run the crankshaft driving device, wherein
the controller (6), in the case where the crankshaft (13) is configured to be rotated, is configured to determine whether the crankshaft (13) is rotated by the crankshaft driving device based on a state of the starter switch (41).

5. An engine system (200) according to any one of claims 1 to 4, further comprising a guide (GU) that is configured to prompt the rider to switch the control mode to the non-idle stop mode in the case where the crankshaft (13) is configured to be rotated by the operation of the kick starter (KP) with the engine (10) that is configured to be stopped and the control mode that is configured to be set to the idle stop mode.

6. An engine system (200) according to any one of claims 1 to 5, wherein
the controller (6) is configured to prevent the start-up of the engine (10) in the case where the crankshaft (13) is configured to be rotated by the crankshaft driving device with the engine (10) that is configured to be stopped and the control mode that is configured to be set to the non-idle stop mode.

7. A straddled vehicle, comprising:
a main body (1) having a drive wheel (7); and
the engine system (200) according to any one of claims 1 to 6 that is configured to generate motive power for rotating the drive wheel (7).

## Patentansprüche

1. Motorsystem (200), das umfasst:
einen Motor (10);
eine Batterie (BT);
eine Kurbelwellen-Antriebseinrichtung, die so eingerichtet ist, dass sie eine Kurbelwelle (13) des Motors (10) mittels elektrischer Energie der Batterie (BT) dreht;
eine Steuereinrichtung (6), die so eingerichtet ist, dass sie den Motor (10) und die Kurbelwellen-Antriebseinrichtung in einem beliebigen Steuer-Modus von einem Modus mit Leerlaufabschaltung und einem Modus ohne Leerlaufabschaltung steuert; und
einen Kickstarter (KP), der so eingerichtet ist, dass er von dem Fahrer betätigt wird, um die Kurbelwelle (13) zu drehen,
wobei das Motorsystem (200) eine Umschalteinrichtung (70) umfasst, die so eingerichtet ist, dass sie von einem Fahrer betätigt wird, um den Steuer-Modus der Steuereinrichtung (6) zwischen dem Modus mit Leerlaufabschaltung und dem Modus ohne Leerlaufabschaltung umzuschalten;
wobei die Steuereinrichtung (6) so eingerichtet ist, dass sie in dem Modus mit Leerlaufabschaltung den Motor (10) und die Kurbelwellen-Antriebseinrichtung so steuert, dass der Motor (10) so eingerichtet ist, dass er in dem Fall abgeschaltet wird, in dem eine vorgegebene Leerlaufabschalt-Bedingung erfüllt ist, und die Steuereinrichtung (6) so eingerichtet ist, dass sie den Motor (10) und die Kurbelwellen-Antriebseinrichtung so steuert, dass der Motor (10) so eingerichtet ist, dass er in dem Fall neu gestartet wird, nachdem die Leerlaufabschalt-Bedingung erfüllt ist und wenn eine vorgegebene Neustart-Bedingung erfüllt ist,
die Steuereinrichtung (6) so eingerichtet ist, dass sie in dem Modus ohne Leerlaufabschaltung den Motor (10) so steuert, dass der Motor (10) so eingerichtet ist, dass er selbst in dem Fall nicht abgeschaltet wird, in dem die Leerlaufabschalt-Bedingung erfüllt ist, und
die Steuereinrichtung (6) so eingerichtet ist, dass sie Starten des Motors (10) in dem Fall verhindert, in dem die Kurbelwelle (13) so eingerichtet ist, dass sie durch eine Betätigung des Kickstarters (KP) gedreht wird, wenn der Motor (10) so eingerichtet ist, dass er abgeschaltet wird, und der Steuer-Modus so eingerichtet ist, dass er auf den Modus mit Leerlaufabschaltung eingestellt ist, und die Steuereinrichtung (6) so eingerichtet ist, dass sie das Starten des Motors (10) in dem Fall zulässt, in dem die Kurbelwelle (13) so eingerichtet ist, dass sie durch die Betätigung des Kickstarters (KP) gedreht wird, wenn der Motor (10) so eingerichtet ist, dass er abgeschaltet wird, und der Steuer-Modus so eingerichtet ist, dass er auf den Modus ohne Leerlaufabschaltung eingestellt ist.

2. Motorsystem (200) nach Anspruch 1, wobei
der Motor (10) enthält:
eine Kraftstoffeinspritzeinrichtung (18), die so eingerichtet ist, dass sie Kraftstoff in einen Einlasskanal (22) oder eine Brennkammer (31a) des Motors (10) einspritzt, sowie
eine Zündeinrichtung (19), die so eingerichtet ist, dass sie ein Kraftstoff-Luft-Gemisch in der Brennkammer (31a) zündet, und
wobei die Steuereinrichtung (6) so eingerichtet ist, dass sie das Starten des Motors (10) verhindert, indem sie den Motor (10) so steuert, dass die Einspritzung des Kraftstoffs durch die Kraftstoffeinspritzeinrichtung (18) oder/und die Zündung durch die Zündeinrichtung (19) nicht durchgeführt wird/werden.

3. Motorsystem (200) nach Anspruch 1 oder 2, wobei
die Steuereinrichtung (6) so eingerichtet ist, dass sie in dem Fall, in dem die Kurbelwellen-Antriebseinrichtung so gesteuert wird, dass sie die Kurbelwelle (13) dreht, bestimmt, dass die Kurbelwelle (13) so eingerichtet ist, dass sie durch die Kurbelwellen-Antriebseinrichtung gedreht wird.

4. Motorsystem (200) nach Anspruch 1 oder 2, das des Weiteren einen Starter-Schalter (41) umfasst, der so eingerichtet ist, dass er von dem Fahrer betätigt wird, um die Kurbelwellen-Antriebseinrichtung zu betreiben, wobei
die Steuereinrichtung (6) so eingerichtet ist, dass sie in dem Fall, in dem die Kurbelwelle (13) so eingerichtet ist, dass sie gedreht wird, auf Basis eines Zustandes des Starter-Schalters (41) feststellt, ob die Kurbelwelle (13) durch die Kurbelwellen-Antriebseinrichtung gedreht wird.

5. Motorsystem (200) nach einem der Ansprüche 1 bis 4, das des Weiteren eine Führungseinrichtung (GU) umfasst, die so eingerichtet ist, dass sie den Fahrer auffordert, den Steuermodus in dem Fall auf den Modus ohne Leerlaufabschaltung umzuschalten, in dem die Kurbelwelle (13) so eingerichtet ist, dass sie durch die Betätigung des Kickstarters (KP) gedreht wird, wenn der Motor (10) so eingerichtet ist, dass er abgeschaltet wird, und der Steuermodus so eingerichtet ist, dass er auf den Modus mit Leerlaufabschaltung eingestellt ist.

6. Motorsystem (200) nach einem der Ansprüche 1 bis 5, wobei
die Steuereinrichtung (6) so eingerichtet ist, dass sie das Starten des Motors (10) in dem Fall verhindert, in dem die Kurbelwelle (13) so eingerichtet ist, dass sie durch die Kurbelwellen-Antriebseinrichtung gedreht wird, wenn der Motor (10) so eingerichtet ist, dass er abgeschaltet wird, und der Steuer-Modus so eingerichtet ist, dass er auf den Modus ohne Leerlaufabschaltung eingestellt ist.

7. Spreizsitz-Fahrzeug, das umfasst:
einen Hauptkörper (1) mit einem Antriebsrad (7); und
das Motorsystem (200) nach einem der Ansprüche 1 bis 6, das so eingerichtet ist, dass es Antriebskraft zum Drehen des Antriebsrades (7) erzeugt.

## Revendications

1. Système de moteur (200) comprenant:
un moteur (10);
une batterie (BT);
un dispositif d'entraînement de vilebrequin configuré pour faire tourner un vilebrequin (13) du moteur (10) par l'alimentation électrique de la batterie (BT);
un contrôleur (6) qui est configuré pour commander le moteur (10) et le dispositif d'entraînement de vilebrequin dans n'importe quel mode de commande, mode d'arrêt au ralenti ou mode d'arrêt sans ralenti; et
un démarreur au pied (KP) configuré pour être actionné par le conducteur afin de faire tourner le vilebrequin (13),
le système de moteur (200) comprenant un commutateur (70) qui est configuré pour être actionné par un conducteur afin de commuter le mode de commande du contrôleur (6) entre le mode d'arrêt au ralenti et le mode d'arrêt sans ralenti;
dans lequel le contrôleur (6),
en mode d'arrêt au ralenti, est configuré pour commander le moteur (10) et le dispositif d'entraînement du vilebrequin de sorte que le moteur (10) est configuré pour être arrêté au cas où une condition d'arrêt au ralenti prédéterminée est satisfaite, et dans lequel le contrôleur (6) est configuré pour commander le moteur (10) et le dispositif d'entraînement du vilebrequin de telle sorte que le moteur (10) est configuré pour être redémarré au cas où la condition d'arrêt au ralenti et la condition de démarrage sont satisfaites,
en mode d'arrêt sans ralenti, le contrôleur (6) est configuré pour commander le moteur (10) de telle sorte que le moteur (10) est configuré pour ne pas être arrêté même au où la condition d'arrêt au ralenti est satisfaite, et
dans lequel le contrôleur (6) est configuré pour empêcher le démarrage du moteur (10) au cas où le vilebrequin (13) est configuré pour être mis en rotation par une opération du démarreur au pied (KP) avec le moteur (10) qui est configuré pour être arrêté et le mode de commande configuré pour passer en mode d'arrêt au ralenti, dans lequel le contrôleur (6) est configuré pour permettre le démarrage du moteur (10) au cas où le vilebrequin (13) est configuré pour être mis en rotation par une opération du démarreur au pied (KP) avec le moteur (10) qui est configuré pour être arrêté et le mode de commande configuré pour passer en mode d'arrêt sans ralenti.

2. Système de moteur (200) selon la revendication 1, dans lequel
le moteur (10) comprend
un dispositif d'injection de carburant (18) configuré pour injecter du carburant dans un passage d'admission (22) ou une chambre de combustion (31a) du moteur (10), et
un dispositif d'allumage (19) configuré pour enflammer un mélange air-combustible dans la chambre de combustion (31a), et
le contrôleur (6) est configuré pour empêcher le démarrage du moteur (10) en commandant le moteur (10) de sorte que l'on se passe au moins de l'injection du carburant par le dispositif d'injection de carburant (18) ou de l'allumage par le dispositif d'allumage (19).

3. Système de moteur (200) selon la revendication 1 ou la revendication 2, dans lequel
le contrôleur (6), au cas où la commande du dispositif d'entraînement de vilebrequin pour faire tourner le vilebrequin (13), est configuré pour déterminer que le vilebrequin (13) est configuré pour être entraîné en rotation par le dispositif d'entraînement de vilebrequin.

4. Système de moteur (200) selon la revendication 1 ou la revendication 2, comprenant en outre un interrupteur de démarrage (41) est configuré pour être actionné par le conducteur afin de faire fonctionner le dispositif d'entraînement de vilebrequin, dans lequel
le contrôleur (6), au cas où le vilebrequin (13) est configuré pour tourner, est configuré pour déterminer si le vilebrequin (13) est entraîné en rotation par le dispositif d'entraînement de vilebrequin en fonction de l'état de l'interrupteur de démarrage (41).

5. Système de moteur (200) selon l'une quelconque des revendications 1 à 4, comprenant en outre un guide (GU) qui est configuré pour inviter le conducteur à commuter le mode de commande vers le mode d'arrêt sans ralenti au cas où le vilebrequin (13) est configuré pour être entraîné en rotation par l'actionnement du démarreur au pied (KP) avec le moteur (10) configuré pour être arrêté et le mode de contrôle qui est configuré pour être réglé sur le mode d'arrêt au ralenti.

6. Système de moteur (200) selon l'une quelconque des revendications 1 à 5, dans lequel
le contrôleur (6) est configuré pour empêcher le démarrage du moteur (10) au cas où le vilebrequin (13) est configuré pour être entraîné en rotation par le dispositif d'entraînement de vilebrequin avec le moteur (10), configuré pour être arrêté et le mode de commande, configuré pour être réglé sur le mode d'arrêt sans ralenti.

7. Véhicule à selle, comprenant:
un corps principal (1) ayant une roue d'entraînement (7); et
le système de moteur (200) selon l'une quelconque des revendications 1 à 6, qui est configuré pour générer une force motrice pour faire tourner la roue d'entraînement (7).
